# EUROPEAN PATENT APPLICATION

(11) **EP 3 162 716 A1**
(43) Date of publication of application: **03.05.2017**
(21) Application number: 15192354.7
(22) Date of filing: 30.10.2015
(51) Int. Cl.: B65B 3/04, B65B 3/18, A61C 5/62, A61C 9/00, B05B 11/00, B05C 17/00, B65B 39/12, B65D 83/00, B65B 3/10, G01F 11/00

(54) **A METHOD FOR FILLING A CARTRIDGE WITH A FLOWABLE COMPONENT**

(71) Applicant: Sulzer Mixpac AG, 9469 Haag (Rheintal) (CH)
(72) Inventor: Turner, Hayden, Ayer, MA Massachusetts 01432 (US)
(74) Representative: Manitz Finsterwald Patentanwälte PartmbB

(57) **Abstract**

The invention relates to a method for filling a cartridge (16) with a flowable component (28), the method comprising the steps of:
- providing a cartridge (16) with a cartridge chamber (18), the cartridge (16) having a piston (20) arranged in the cartridge chamber (18, the cartridge chamber and the piston defining a storage volume (30), the piston having a through-hole (22),
- arranging a filling nozzle (14) at the through-hole (22) and
- filling the cartridge (16) by dispensing the flowable component (28) through the through-hole (22) of the piston (20) into the storage volume (30).

The invention further relates to a system suitable for executing the method.

## Description

The present invention relates to a method for filling a cartridge with a flowable component. The method can be utilized for filling cartridges used e.g. in the industrial or dental sector.

Cartridges can store a variety of flowable components, such as adhesives, resins, silicones, dental materials and the like. If a certain amount of the flowable component is required, the component can be ejected from the cartridge by applying pressure on a piston of the cartridge, thereby dispensing the component through an outlet opening of the cartridge.

In general, there exist two different ways to fill the cartridge with the flowable component. One option is the so-called "front filling", wherein the flowable component is filled through an outlet opening provided in the front side of the cartridge (which is later used for dispensing the component). When filling the component through the outlet opening the piston is usually already inserted in the cartridge and is moved from its foremost position to its backmost position during the filling process. However, usually cartridges are not designed to be front-filled. The diameter of the outlet opening is often very small, resulting in a slow filling process, which is particularly relevant for highly viscous materials. Additionally, often air is trapped inside the cartridge since the cartridges are not optimized to limit air entrapment. Front filling is therefore often dismissed because of its slow speed and high risk of air entrapment.

Another option for filling the cartridge is "back filling", wherein the piston is not yet inserted into the cartridge and the component is filled through a long nozzle into the cartridge through an opening of the cartridge which later allows the insertion of the piston. During the filling process, the nozzle is moved upwards (or the cartridge is moved downwards) preferably at the same speed as the filling level raises. This is necessary to minimize the amount of air that might be trapped inside the cartridge. Once the desired amount of material has been filled into the cartridge, the piston has to be set. Setting the piston can, however, be easily prone to errors as air can be trapped between the piston and the component. Furthermore, sealing lips of the piston may be damaged when inserting the piston into the cartridge. This is particularly true, if the piston is set by inexperienced personnel. Additionally, for back-filling, the piston has to be shipped separately from the cartridge which may lead to damages of the piston during transport. In summary, back filling of the cartridge can lead to errors or damages and requires a high level of surveillance of the filling process.

In view of the foregoing it is an object of the present invention to provide a method for filling a cartridge which allows a quick filling of the cartridge and reduces the risk of damages to the piston and failures in the process of filling.

These objects are achieved by a method in accordance with claim 1 and a system having the features of claim 9.

Particularly, these objects are satisfied by a method comprising the steps of:
- providing a cartridge with a cartridge chamber, the cartridge having a piston arranged in the cartridge chamber, the cartridge chamber and the piston defining a storage volume, the piston having a through-hole,
- arranging a filling nozzle at the through-hole and
- filling the cartridge by dispensing the flowable component through the through-hole of the piston into the storage volume.

In other words, the method of the invention uses a cartridge in which the piston is already set, wherein the piston has a through-hole for filling the flowable component through the piston into the storage volume of the cartridge. As the piston is already set into the cartridge chamber, the setting of the piston can be conducted e.g. by the manufacturer of the cartridge using experienced personnel. Thereby the risk of damaging e.g. the sealing lips of the piston is dramatically reduced. Further, the risk of air entrapment when inserting the piston is eliminated.

A further advantage of the inventive method is that the through-hole in the piston can have a sufficiently large size or diameter that allows a fast filling of the cartridge, even when using highly viscous components.

The invention is thus based on the finding that the benefits of back filling a cartridge (e.g. a quick filling process) can be adopted, if the piston is inserted into the cartridge chamber before the filling of the cartridge, as long as the piston comprises a through-hole that allows the filling through the piston.

The cartridge chamber can be the interior of the cartridge, i.e. the cartridge chamber can be bordered by an inner wall of the cartridge. The piston can be arranged in the cartridge chamber, whereby the cartridge chamber and the piston define a substantially enclosed volume that is referred to as storage volume. The through-hole through the piston can be a direct passage through the piston, wherein preferably no components of the piston extend into the through-hole.

The through-hole can be formed tube-like, having a round, circular, rectangular or square sectional shape, wherein the filling nozzle can at least partly reach into the through-hole. The outer shape of the filling nozzle can match the shape of the through-hole. The filling nozzle can be part of a dispensing apparatus.

It is to be noted that the term "arranged at" includes "adjacent to", "comprises" and "directly connected to". As an example, the filling nozzle can either be (temporarily) connected directly to the through-hole or be arranged adjacent to the through-hole.

Preferably, after filling the cartridge, the through-hole can be sealed. The sealing of the through-hole prevents the flowable component from exiting through the through-hole when the piston ejects the flowable component. The sealing may be achieved by a sealing plug which advantageously can completely fill the through-hole. Thereby any remaining air in the through-hole may be removed from the through-hole.

Advantageously, during the filling of the cartridge the filling nozzle can reach into the through-hole. If the filling nozzle reaches into the through-hole, the risk of dispensing the flowable component onto the outside of the piston or the cartridge is reduced. This is particularly relevant if the filling of the cartridge is performed manually. Particularly, the cartridge can be held under the filling nozzle, whereby the flowable component can flow through the through-hole due to gravity.

It is preferred, if during the filling of the cartridge the filling nozzle is sealingly connected to the through-hole. A sealing connection between the filling nozzle and the through-hole can prevent the flowable component from getting into contact with the ambient air, humidity or oxygen.

More preferably, dispensing the flowable component through the through-hole can be triggered when the filling nozzle is arranged at the through-hole. Thereby, the filling can be started automatically. Particularly, the filling can be triggered or started when the sealing connection is established.

Advantageously the piston can be moved relative to the cartridge when dispensing the flowable component through the through-hole, the piston being moved preferably by pressure exerted from the flowable component. In other words, the flowable component can be dispensed into the cartridge using a certain pressure. This pressure can move the piston in order to allow a complete filling of the cartridge. As the piston moves relative to the cartridge, the storage volume increases.

It is preferred, if before dispensing the flowable component, the piston is arranged adjacent an outlet opening of the cartridge. The outlet opening may form a distal end of the cartridge, wherein the outlet opening is used to dispense the flowable component in the later operation of the cartridge. At the beginning of the filling of the cartridge, the piston can therefore be arranged at the distal end of the cartridge, wherein the storage volume can be substantially zero. As more and more flowable component flows through the through-hole, the piston is moved toward a proximal end of the cartridge, thereby increasing the storage volume. It is particularly advantageous, if initially the piston is arranged at the distal end of the cartridge since substantially no air can then be entrapped in the storage volume.

Preferably dispensing the flowable component can be stopped when the piston reaches a predefined position. The piston reaching the predefined position can indicate that a predefined volume of the flowable component has been filled into the cartridge. The predefined position can e.g. be a position in which the piston is flush with the proximal end of the cartridge or a position in which the piston comprises a predefined distance with the proximal end of the cartridge. Alternatively, after filling a predefined volume through the through-hole, dispensing the flowable component can stop.

Advantageously, after dispensing the flowable component has stopped, low pressure can be applied to the filling nozzle and/or the cartridge can be subjected to vibration. Using the low pressure, remaining air is sucked out of the storage volume of the cartridge. Vibrations can be used to facilitate that small air bubbles trapped in the flowable component can travel toward the filling nozzle (and be removed from the storage volume by the low pressure), even if the flowable component is highly viscous or tough-flowing. Thereby, the volume of potentially entrapped air can further be minimized.

The invention further relates to a system for filling a cartridge with a flowable component, the system comprising:
- a cartridge with a cartridge chamber, the cartridge having a piston arranged in the cartridge chamber, the cartridge chamber and the piston defining a storage volume, the piston having a through-hole,
- a dispensing apparatus having a filling nozzle, wherein the filling nozzle is configured to dispense the flowable component through the through-hole of the piston into the storage volume.

The system can be adapted to execute the above-described method.

The cartridge of the system can e.g. be used in the industrial sector, in the construction industry and also in the dental sector, wherein such a cartridge is used to store liquid or flowable components, frequently pasty or viscous to highly viscous substances, and to dispense them for the respective application as required. Examples for such substances are caulking compounds, materials for chemical dowels or chemical anchors, adhesives, pastes or impression materials in the dental sector. The cartridge can be produced from plastic, e.g. Polypropylene (PP) or Polyethylene (PE), and be manufactured in an injection molding process. The cartridge chamber can be adapted to hold a volume of flowable component between 100 ml and 1000 ml, alternatively between 400 ml and 4000 ml.

Preferably, the filling nozzle can be adapted to the shape of the through-hole. The shapes of the filling nozzle and the through-hole can therefore be matching. Particularly, an outer contour of the filling nozzle can match an inner contour of the through-hole. This allows the forming of a sealing (i.e. sealed) connection between the filling nozzle and the through-hole. To further improve the sealing functionality, the filling nozzle can comprise a flexible or elastic material, e.g. a synthetic rubber.

It is advantageous, if the system further comprises means for detecting a sealing connection between the filling nozzle and the through-hole. These detecting means can allow an automatic start of the filling after the sealing connection is detected. The detection can exemplary be based on a pressure switch or an electrical connection that is closed by abutting the filling nozzle onto the surface of the through-hole.

Advantageously the piston can comprise a cylindrical shape and may have a diameter between 20 mm and 80 mm. The piston may have a height of about 20 mm. It is preferred, if an area of the through-hole takes up at least 5%, preferably at least 10%, more preferably at least 25%, of a base area of the piston. A through-hole having at least such an area allows a particularly quick filling of the cartridge. Contemplating a circular piston, the through-hole may have half the diameter of the piston, whereby the area of the through-hole takes up 25% of the base area of the piston.

A maximum area of the through-hole may be 40% or 50% of the base area of the piston.

A diameter of the through-hole may be equal or smaller than 20 mm, preferably equal or smaller than 15 mm. Alternatively the through-hole may have a diameter that is approximately 20% to 30% of the diameter of the piston.

The through-hole may be arranged at a center of the base area of the piston. Alternatively or additionally, the through-hole may be positioned such that the through-hole forms a part of an outer border of the piston. The through-hole may also comprise two or more separate passages or bores through the piston.

Preferably the cartridge can comprise an outlet opening, the outlet opening being closed with a closing means, the closing means being removable from the outlet opening. As already mentioned above, the outlet opening is the dispensing opening during the later "normal" operation of the cartridge. The outlet opening should be closed during filling so that the flowable component does not exit the cartridge through the outlet opening. The outlet opening can e.g. be closed by a plug that is manufactured together (e.g. in one process) with the cartridge, preferably by injection molding. This plug or closing cap can be connected to the cartridge with a portion of thin material and can be broken off after the filling or before the normal usage of the cartridge.

Advantageously the piston can comprise at least one sealing lip that sealingly connects the piston with an inner wall of the cartridge chamber and/or a venting mechanism that allows air from the cartridge chamber to escape. The sealing lips may have the form of rims that seal the flowable component from ambient air, humidity or oxygen. The venting mechanism may comprise a labyrinth structure that allows air from the storage volume to escape after the through-hole has been sealed.

The advantageous and preferable features and embodiments of the inventive method described in the foregoing also apply to the inventive system.

Further embodiments of the invention are described in the following description of the Figures. The invention will be explained in the following in detail by means of exemplary embodiments and with reference to the drawings in which is shown:
- Fig. 1: a schematic view of a system with a cartridge and a dispensing apparatus before the filling of the cartridge;
- Fig. 2: a schematic view of the system of Fig. 1 during the filling of the cartridge; and
- Fig. 3: a schematic view of the system of Fig. 1 after the filling of the cartridge.

In the following, the same reference numerals will be used for parts having the same or equivalent function. Any statement made having regard to the direction of a component are made relative to the position shown in the drawing and can naturally vary in the actual position of application.

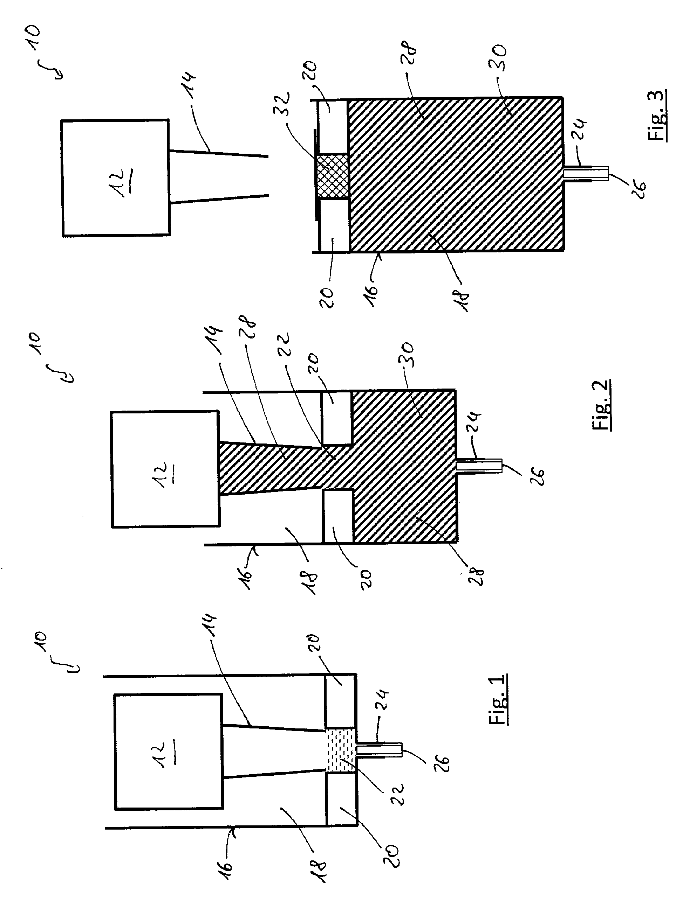

Fig. 1 shows a system 10 in a schematic sectional view. The system 10 comprises a dispensing apparatus 12 with a filling nozzle 14. The system 10 further comprises a cartridge 16 having a cartridge chamber 18. Inside the cartridge chamber 18 a piston 20 is arranged, the piston 20 comprises a through-hole 22.

Fig. 1 shows the cartridge 16 in an empty state in which the piston 20 is arranged adjacent to an outlet opening 24 that is sealed by an injection molded closing cap 26. The closing cap 26 is made from a thin plastic material and can therefore be broken off manually to open the outlet opening 24.

The filling nozzle 14 has a frustoconical form and is arranged such that it forms a sealing connection with the through-hole 22 of the piston 20. When the sealing connection is detected by a detection means (not shown) of the dispensing apparatus 12, a flowable component 28, e.g. a construction or dental material is dispensed from the filling nozzle 14 into the cartridge 16.

Dispensing the flowable component 28 into the cartridge is shown in Fig. 2. The flowable component 28 is pressed through the filling nozzle 14 and through the through-hole 22 and thereby moves the piston 20 upwards such that a storage volume 30 is expanded within the cartridge chamber 18.

During the filling of the cartridge 16, the outlet opening 24 moves away from the filling nozzle 14 of the dispensing apparatus 12 in the same manner as the piston 20 moves away from the outlet opening 24.

A state in which the cartridge is fully filled with the flowable component 28 is shown in Fig. 3. In the fully filled state, the storage volume 30 substantially equals the volume of the cartridge chamber 18. In this state the sealing connection between the filling nozzle 14 and the through-hole 22 can be terminated. The through-hole 22 can then be closed with a sealing plug 32 so that the flowable component 28 can be stored inside the cartridge 16 for prolonged periods of time.

### Reference numeral list

- 10: system
- 12: dispensing apparatus
- 14: filling nozzle
- 16: cartridge
- 18: cartridge chamber
- 20: piston
- 22: through-hole
- 24: outlet opening
- 26: closing cap
- 28: flowable component
- 30: storage volume
- 32: sealing plug

## Claims

1. A method of filling a cartridge (16) with a flowable component (28), the method comprising the steps of:
- providing a cartridge (16) with a cartridge chamber (18), the cartridge (16) having a piston (20) arranged in the cartridge chamber (18), the cartridge chamber (18) and the piston (20) defining a storage volume (30), the piston (20) having a through-hole (22),
- arranging a filling nozzle (14) at the through-hole (22) and
- filling the cartridge (16) by dispensing the flowable component (28) through the through-hole (22) of the piston (20) into the storage volume (30).

2. The method in accordance with claim 1, wherein
after filling the cartridge (16), the through-hole (22) is sealed.

3. The method in accordance with claim 1 or 2, wherein
during the filling of the cartridge (16) the filling nozzle (14) reaches into the through-hole (22).

4. The method in accordance with at least one of the preceding claims, wherein
during the filling of the cartridge (16) the filling nozzle (14) is sealingly connected to the through-hole (22).

5. The method in accordance with at least one of the preceding claims, wherein
dispensing the flowable component (28) through the through-hole (22) is triggered when the filling nozzle (14) is arranged at the through-hole (22).

6. The method in accordance with at least one of the preceding claims, wherein
the piston (20) is moved relative to the cartridge (16) when dispensing the flowable component (28) through the through-hole (22), the piston (20) being moved preferably by pressure exerted from the flowable component (28).

7. The method in accordance with at least one of the preceding claims, wherein
before dispensing the flowable component (28), the piston (20) is arranged adjacent an outlet opening (24) of the cartridge (16).

8. The method in accordance with at least one of the preceding claims, wherein
dispensing the flowable component (28) stops when the piston (20) reaches a predefined position.

9. A system (10) for filling a cartridge (16) with a flowable component (28), the system (10) comprising:
- a cartridge (16) with a cartridge chamber (18), the cartridge (16) having a piston (20) arranged in the cartridge chamber (18), the cartridge chamber (18) and the piston (20) defining a storage volume (30), the piston (20) having a through-hole (22),
- a dispensing apparatus (12) having a filling nozzle (14),
wherein
the filling nozzle (14) is configured to dispense the flowable component (28) through the through-hole (22) of the piston (20) into the storage volume (30).

10. The system (10) in accordance with claim 9, wherein
the filling nozzle (14) is adapted to the shape of the through-hole (22).

11. The system (10) in accordance with claim 9 or 10, further comprising means for detecting a sealing connection between the filling nozzle (14) and the through-hole (22).

12. The system (10) in accordance with at least one of claims 9 to 11, wherein an area of the through-hole (22) takes up at least 5%, preferably at least 10%, more preferably at least 25%, of a base area of the piston (20).

13. The system (10) in accordance with at least one of claims 9 to 12, wherein the cartridge (16) comprises an outlet opening (24), the outlet opening (24) being closed with a closing means (26), the closing means (26) being removable from the outlet opening (24).

14. The system (10) in accordance with at least one of claims 9 to 13, wherein the piston (20) comprises at least one sealing lip that sealingly connects the piston with an inner wall of the cartridge chamber (18) and/or a venting mechanism that allows air from the cartridge chamber (18) to escape.
